# EUROPÄISCHE PATENTSCHRIFT

(11) **EP 4 077 988 B1**
(45) Veröffentlichungstag und Bekanntmachung des Hinweises auf die Patenterteilung: **21.08.2024**
(21) Anmeldenummer: 20820385.1
(22) Anmeldetag: 04.12.2020
(51) Int. Cl.: F16K 11/085, F16K 11/16, F01P 7/14, F16K 31/53, F16K 31/528

(54) **VENTILSYSTEM**
VALVE SYSTEM
SYSTÈME DE SOUPAPE

(30) Priorität: 19.12.2019 DE 102019135042; 20.01.2020 DE 102020101186; 16.03.2020 DE 102020107125
(43) Veröffentlichungstag der Anmeldung: 26.10.2022
(73) Patentinhaber: HELLA GMBH & CO. KGAA, 59552 Lippstadt (DE)
(72) Erfinder: TIEMEYER, Sebastian, 44143 Dortmund (DE); SUNDERMEIER, Verena, 33129 Dellbrück (DE)
(74) Vertreter: Behr-Wenning, Gregor
(86) Internationale Anmeldenummer: PCT/EP2020/084646
(87) Internationale Veröffentlichungsnummer: WO 2021/122056

(56) Entgegenhaltungen:
- DE-A1- 102006 059 029
- DE-A1- 102009 020 187
- DE-A1- 102012 022 238
- DE-A1- 102015 210 157
- DE-A1- 4 000 360
- DE-B3- 102007 019 064
- DE-B4- 102009 020 187
- DE-C- 82 102
- DE-C2- 4 000 360
- DE-T5- 112014 003 423
- US-A1- 2006 118 066
- US-A1- 2016 281 585
- US-A1- 2020 124 204

## Beschreibung

Die vorliegende Erfindung bezieht sich auf ein Ventilsystem der im Oberbegriff des Anspruchs 1 genannten Art.

Derartige Ventilsysteme sind aus dem Stand der Technik in zahlreichen Ausführungsvarianten bereits bekannt. Die bekannten Ventilsysteme umfassen ein erstes Ventil und ein zweites Ventil, wobei beide Ventile jeweils ein Gehäuse mit einer Mehrzahl von Gehäuseöffnungen, jeweils zur strömungsleitenden Verbindung mit einem externen Strömungskanal für ein Fluid, und einen in dem Gehäuse um eine Drehachse drehbar angeordneten Ventilkörper mit mindestens einem Verbindungskanal zur strömungsleitenden Verbindung von mindestens zwei der Gehäuseöffnungen des Gehäuses aufweist, und wobei zwischen dem Gehäuse und dem Ventilkörper eine Dichtung mit zu den Gehäuseöffnungen in dem Gehäuse korrespondierenden Dichtungsöffnungen zur Abdichtung der strömungsleitenden Verbindungen gegenüber einer freien Umgebung angeordnet ist.

Beispielsweise ist aus der DE 11 2014 003 423 T5 ein derartiges Ventilsystem bekannt. Dieses Ventilsystem ist darüber hinaus derart ausgebildet, dass der Ventilkörper des ersten Ventils und der Ventilkörper des zweiten Ventils mittels einer Kopplungsvorrichtung des Ventilsystems miteinander mechanisch koppelbar sind, wobei die Kopplungsvorrichtung derart ausgebildet ist, dass die Ventilkörper in einem ersten Betriebszustand des Ventilsystems mittels der Kopplungsvorrichtung gemeinsam drehbar sind und in einem zweiten Betriebszustand des Ventilsystems mittels der Kopplungsvorrichtung unabhängig voneinander drehbar sind. Hierbei weist die Kopplungsvorrichtung eine Freilaufanordnung auf, die derart ausgebildet ist, dass die Ventilkörper in einem Freilaufzustand der Freilaufanordnung bei einer Drehung des Ventilkörpers um die jeweilige Drehachse in einem betragsmäßig vorher festgelegten Drehwinkelbereich nicht drehmomentübertragend verbunden sind.

Die US 2016 281 585 A1, die DE 10 2015 210 157 A1, die DE 10 2012 022 238 A1, die DE 10 2009 020 187 A1, die DE 10 2007 019 064 B3 und die DE 82 102 C offenbaren ähnliche Ventilsysteme.

Weitere bekannte Ventilsysteme sind in der DE 40 00 360 A1, der DE 10 2006 059 029 A1 und der US 2006 118 066 A1 angegeben.

Hier setzt die vorliegende Erfindung an.

Der vorliegenden Erfindung liegt die Aufgabe zugrunde, ein Ventilsystem zu verbessern.

Diese Aufgabe wird durch ein Ventilsystem mit den Merkmalen des Anspruchs 1 gelöst, das dadurch gekennzeichnet ist, dass der Ventilkörper und das Gehäuse des ersten und/oder zweiten Ventils zueinander korrespondierende Rastmittel aufweisen, wobei die Rastmittel derart ausgebildet sind, dass dieser Ventilkörper in dem Freilaufzustand der Freilaufanordnung mit diesem Gehäuse verrastet ist und in einem Kraftübertragungszustand der Freilaufanordnung, in dem mittels der Kopplungsvorrichtung ein Drehmoment zwischen den beiden Ventilkörpern übertragbar ist, die Verrastung der Rastmittel gelöst ist. Die Unteransprüche betreffen vorteilhafte Weiterbildungen der Erfindung.

Ein wesentlicher Vorteil des erfindungsgemäßen Ventilsystems liegt insbesondere darin, dass das Ventilsystem verbessert ist. Aufgrund der erfindungsgemäßen Ausbildung des Ventilsystems ist es möglich, eine Mehrzahl von externen Strömungskanälen eines Fluidsystems mit beispielsweise einer Mehrzahl von Fluidkreisläufen auf konstruktiv und schaltungstechnisch einfache Art und Weise anzusteuern. Mittels der Erfindung ist es somit möglich, ein Ventilsystem, bei gleichzeitig geringerem konstruktiven, fertigungstechnischen und schaltungstechnischen Aufwand, für eine Vielzahl von Kombinationen zwischen miteinander strömungsleitend verbindbaren und trennbaren externen Strömungskanälen für eine Vielzahl von Fluidsystemen geeignet auszubilden. Entsprechend sind der Montageaufwand und die Kosten sowie der dafür erforderliche Bauraum wesentlich reduziert. Durch die erfindungsgemäße Rastmittelanordnung ist sichergestellt, dass der in dem Freilaufzustand der Freilaufanordnung nicht angetriebene Ventilkörper nicht in ungewünschter Weise, beispielsweise aufgrund von Reibung oder dergleichen, mit dem in dem Freilaufzustand der Freilaufanordnung angetriebenen Ventilkörper des ersten Ventils mitdreht und in dem Kraftübertragungszustand der Freilaufanordnung in gewünschter Weise mit dem angetriebenen Ventilkörper mitdreht.

Grundsätzlich ist das Ventilsystem nach Art, Funktionsweise, Material, Dimensionierung und Anordnung in weiten geeigneten Grenzen frei wählbar.

Eine vorteilhafte Weiterbildung des erfindungsgemäßen Ventilsystems sieht vor, dass die Freilaufanordnung mindestens eine Nut und mindestens einen zu der Nut korrespondierend ausgebildeten und in die Nut eingreifenden Vorsprung aufweist, wobei die Nut und der Vorsprung jeweils an einem der beiden Ventilkörper und/oder an mindestens einem mit mindestens einem der beiden Ventilkörper kraftübertragend verbundenen Übertragungsmittel angeordnet sind. Hierdurch ist die Freilaufanordnung der Kopplungsvorrichtung auf konstruktiv und fertigungstechnisch einfache und robuste Weise verwirklicht.

Eine weitere vorteilhafte Weiterbildung des erfindungsgemäßen Ventilsystems sieht vor, dass die Kopplungsvorrichtung mindestens eine Zahnradpaarung mit einem ersten Zahnrad und einem zweiten Zahnrad aufweist, wobei die beiden Zahnräder jeweils an einem der beiden Ventilkörper und/oder an mindestens einem mit mindestens einem der beiden Ventilkörper kraftübertragend verbundenen Übertragungsmittel angeordnet sind. Auf diese Weise ist eine ordnungsgemäße Drehmomentübertragung zwischen dem ersten Ventilkörper auf der einen Seite und dem zweiten Ventilkörper auf der anderen Seite auch unter schwierigen Umgebungsbedingungen, wie beispielsweise hohen Umgebungstemperaturen oder dergleichen, sichergestellt, so dass die Funktion des erfindungsgemäßen Ventilsystems gewährleistet ist. Der Begriff Zahnrad ist dabei weit auszulegen und umfasst auch Konstruktionen, bei denen lediglich ein Teil eines Radumfangs, innen oder außen, mit einer Zahnung versehen ist.

Eine besonders vorteilhafte Weiterbildung des erfindungsgemäßen Ventilsystems sieht vor, dass das erste Ventil und/oder das zweite Ventil als ein Mehrwegeventil ausgebildet ist, bevorzugt, dass mindestens einer des mindestens einen Verbindungskanals des Mehrwegeventils als eine bogenförmige, bevorzugt als eine kreisbogenförmige, Ausnehmung des Ventilkörpers ausgebildet ist. Auf diese Weise sind mittels des erfindungsgemäßen Ventilsystems auch sehr komplexe Fluidsysteme auf konstruktiv und schaltungstechnisch sowie platzsparende Art realisierbar.

Eine vorteilhafte Weiterbildung der vorgenannten Ausführungsform des erfindungsgemäßen Ventilsystems sieht vor, dass das Mehrwegeventil mindestens eine Ebene mit einer Mehrzahl von Verbindungskanälen aufweist, bevorzugt, dass einer der Verbindungskanäle dieser Ebene als ein zentraler Kanal ausgebildet ist, wobei die übrigen Verbindungskanäle dieser Ebene jeweils zu beiden Seiten des zentralen Kanals angeordnet sind. Hierdurch ist die vorgenannte Ausführungsform auf konstruktiv besonders einfache Weise realisiert.

Eine vorteilhafte Weiterbildung der letztgenannten Ausführungsform des erfindungsgemäßen Ventilsystems sieht vor, dass das Mehrwegeventil eine Mehrzahl von Ebenen aufweist, wobei die einzelnen Ebenen parallel zueinander angeordnet sind, bevorzugt, dass sich mindestens einer des mindestens einen Verbindungskanals über mindestens zwei Ebenen erstreckt, besonders bevorzugt, dass dieser Verbindungskanal als ein zentraler Kanal ausgebildet ist. Auf diese Weise ist das Mehrwegeventil noch variabler einsetzbar, so dass mit diesem Mehrwegeventil noch komplexere Fluidsysteme schaltbar sind. Mittels der bevorzugten und insbesondere mittels der besonders bevorzugten Ausführungsform dieser Weiterbildung ist eine mehrere Ebenen verbindende und damit eine Verbindung der diesen Ebenen jeweils zugeordneten Gehäuseöffnungen auf konstruktiv und fertigungstechnisch einfache Art ermöglicht.

Eine bevorzugte Weiterbildung des erfindungsgemäßen Ventilsystems nach einem der Ansprüche 1 bis 6 sieht vor, dass das Ventilsystem derart ausgebildet ist, dass mittels des Ventilsystems gleichzeitig drei externe Fluidkreisläufe ansteuerbar sind, wobei jeder der drei externen Fluidkreisläufe mittels der externen Strömungskanäle mit mindestens zwei voneinander verschiedenen Gehäuseöffnungen strömungsleitend verbunden ist, bevorzugt, dass mindestens einer der drei externen Fluidkreisläufe einen als Bypasskanal ausgebildeten externen Strömungskanal für mindestens eine Komponente dieses externen Fluidkreislaufs aufweist, wobei der Bypasskanal separat an einer der Gehäuseöffnungen des Ventilsystems strömungsleitend angeschlossen ist. Hierdurch ist es beispielsweise möglich, auch sehr komplexe Fluidsysteme mit Fluidkreisläufen lediglich mit einem einzigen Mehrwegeventil des erfindungsgemäßen Ventilsystems anzusteuern. Dies gilt insbesondere für die bevorzugte Ausführungsform.

Eine weitere vorteilhafte Weiterbildung des erfindungsgemäßen Ventilsystems sieht vor, dass das Gehäuse des ersten Ventils und das Gehäuse des zweiten Ventils zumindest teilweise, bevorzugt vollständig, als ein gemeinsames Gehäuse ausgebildet sind. Auf diese Weise ist der konstruktive Aufbau des Ventilsystems und dessen Fertigung wesentlich vereinfacht. Beispielsweise ist es hiermit möglich, die Anzahl der Bauteile, beispielsweise die Anzahl der Dichtungen, zu reduzieren, da einzelne Dichtungen zu einer einzigen kombinierten Dichtung sowohl für das erste wie auch für das zweite Ventil baulich zusammengefasst werden können.

Anhand der beigefügten, grob schematischen Zeichnungen wird die Erfindung nachfolgend näher erläutert. Dabei zeigt:
- Fig. 1: ein erstes Ausführungsbeispiel des erfindungsgemäßen Ventilsystems in einer perspektivischen Darstellung,
- Fig. 2a: das erste Ausführungsbeispiel in einer Draufsicht,
- Fig. 2b: das erste Ausführungsbeispiel in einer teilweisen, geschnittenen Draufsicht,
- Fig. 3a: das erste Ausführungsbeispiel jeweils in einer vereinfachten, geschnittenen
- bis 3h: Draufsicht,
- Fig. 4: das erste Ausführungsbeispiel in einem verfahrenstechnischen Fließbild,
- Fig. 5a: ein zweites Ausführungsbeispiel des erfindungsgemäßen Ventilsystems in einer seitlichen Schnittdarstellung,
- Fig. 5b: den Ventilkörper des ersten Ventils des zweiten Ausführungsbeispiels in einer geschnittenen Seitenansicht und in einer geschnittenen Unteransicht, sowie den Ventilkörper des zweiten Ventils des zweiten Ausführungsbeispiels in einer geschnittenen Seitenansicht und in einer geschnittenen Draufsicht und
- Fig. 6a: das zweite Ausführungsbeispiel in jeweils zwei geschnittenen Draufsichten,
- bis 6f: einmal mit Blick auf die Verbindungskanäle und einmal mit Blick auf die Kopplungsvorrichtung.

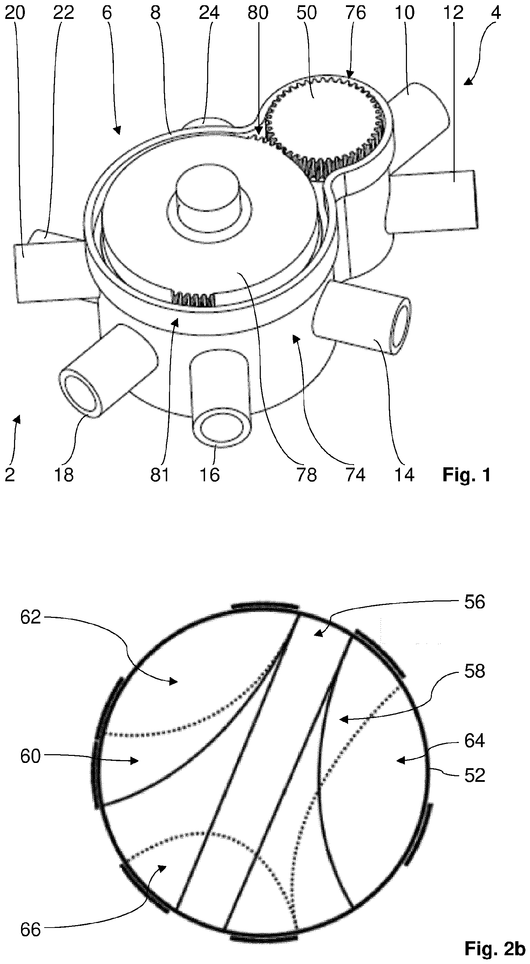

In den Fig. 1 bis 4 ist ein erstes Ausführungsbeispiel des erfindungsgemäßen Ventilsystems rein exemplarisch dargestellt.

Das Ventilsystem 2 umfasst ein erstes Ventil 4 und ein zweites Ventil 6, wobei beide Ventile 4, 6 ein gemeinsames Gehäuse 8 mit einer Mehrzahl von Gehäuseöffnungen 10, 12, 14, 16, 18, 20, 22, 24, jeweils zur strömungsleitenden Verbindung mit einem externen Strömungskanal 30, 32, 34, 36, 38, 40, 42, 44 für ein nicht dargestelltes Fluid, nämlich ein Kühlmittel, und einen in dem Gehäuse 8 um eine Drehachse 46, 48 drehbar angeordneten Ventilkörper 50, 52 mit mindestens einem Verbindungskanal 54, 56, 58, 60, 62, 64, 66 zur strömungsleitenden Verbindung von mindestens zwei der Gehäuseöffnungen 10, 12, 14, 16, 18, 20, 22, 24 des Gehäuses 8 aufweisen, und wobei zwischen dem Gehäuse 8 und dem Ventilkörper 50, 52 eine nicht dargestellte Dichtung mit zu den Gehäuseöffnungen 10, 12, 14, 16, 18, 20, 22, 24 in dem Gehäuse 8 korrespondierenden Dichtungsöffnungen zur Abdichtung der strömungsleitenden Verbindungen gegenüber einer freien Umgebung angeordnet ist. Die beiden Ventile 4, 6 sind miteinander ebenfalls strömungsleitend verbunden, wobei diese strömungsleitende, also kühlmittelleitende, Verbindung in den Fig. 1 bis 4 nicht näher dargestellt ist.

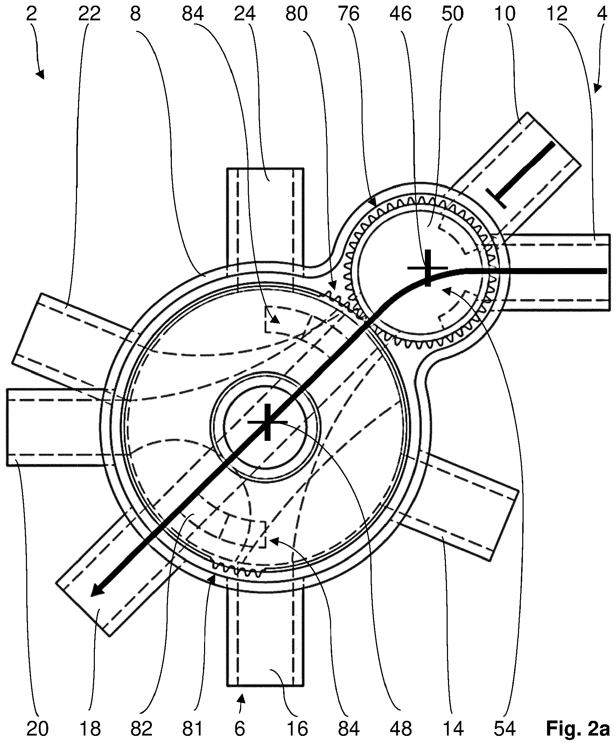

Bei dem vorliegenden Ausführungsbeispiel sind das Gehäuse des ersten Ventils 4 und das Gehäuse des zweiten Ventils 6 vollständig als ein gemeinsames Gehäuse, nämlich das Gehäuse 8, ausgebildet. Siehe hierzu die Fig. 1 und 2a.

Ferner ist das zweite Ventil 6 als ein Mehrwegeventil ausgebildet, wobei mindestens einer der Verbindungskanäle 56, 58, 60, 62, 64, 66 des als Mehrwegeventil ausgebildeten zweiten Ventils 6 als eine bogenförmige, bevorzugt als eine kreisbogenförmige, Ausnehmung des Ventilkörpers 52 ausgebildet ist. Hier sind die Verbindungskanäle 58, 60, 62, 64, 66 jeweils mit einer bogenförmigen Ausnehmung des Ventilkörpers 52 ausgebildet. Das als Mehrwegeventil ausgebildete zweite Ventil 6 weist eine erste Ebene und eine zweite Ebene auf, jeweils mit einer Mehrzahl von Verbindungskanälen, wobei der Verbindungskanal 56 als ein zentraler Kanal auf der ersten Ebene ausgebildet ist und die übrigen Verbindungskanäle 58, 60 der ersten Ebene jeweils zu beiden Seiten des zentralen Kanals 56 angeordnet sind. Die erste Ebene weist somit die Verbindungskanäle 56, 58, 60 auf, während die zweite Ebene die Verbindungskanäle 62, 64, 66 umfasst. Die erste Ebene ist in der Bildebene der Fig. 1 unterhalb der zweiten Ebene angeordnet. Die erste und die zweite Ebene sind parallel zueinander angeordnet. Im Unterschied zu dem vorliegenden Ausführungsbeispiel sind auch andere Ausführungsformen der Erfindung denkbar, bei denen sich mindestens einer des mindestens einen Verbindungskanals über mindestens zwei Ebenen erstreckt, besonders bevorzugt, dass dieser Verbindungskanal als ein zentraler Kanal ausgebildet ist. Die Verbindungskanäle 56, 58, 60, 62, 64, 66 des Ventilkörpers 52 des zweiten Ventils 6 sind der Übersichtlichkeit wegen in der Fig. 2b dargestellt, wobei die Verbindungskanäle 56, 58, 60 der ersten Ebene in der Fig. 2b mit durchgezogenen Linien und die Verbindungskanäle 62, 64, 66 der zweiten Ebene in der Fig. 2b mit punktierten Linien dargestellt sind.

Das Ventilsystem 2 ist derart ausgebildet, dass mittels des Ventilsystems 2 gleichzeitig drei externe Fluidkreisläufe 68, 70, 72 ansteuerbar sind, wobei jeder der drei externen Fluidkreisläufe 68, 70, 72 mittels der externen Strömungskanäle 30, 32, 34, 36, 38, 40, 42, 44 mit mindestens zwei voneinander verschiedenen Gehäuseöffnungen 10, 12, 14, 16, 18, 20, 22, 24 strömungsleitend verbunden ist, wobei mindestens einer der drei externen Fluidkreisläufe 68, 70, 72 einen als Bypasskanal ausgebildeten externen Strömungskanal 30, 42 für mindestens eine Komponente dieses externen Fluidkreislaufs 68, 72 aufweist, wobei der Bypasskanal separat an einer der Gehäuseöffnungen 10, 22 des Ventilsystems 2 strömungsleitend angeschlossen ist.

Ferner sind der Ventilkörper 50 des ersten Ventils 4 und der Ventilkörper 52 des zweiten Ventils 6 mittels einer Kopplungsvorrichtung 74 des Ventilsystems 2 miteinander mechanisch koppelbar, wobei die Kopplungsvorrichtung 74 derart ausgebildet ist, dass die Ventilkörper 50, 52 in einem ersten Betriebszustand des Ventilsystems 2 mittels der Kopplungsvorrichtung 74 gemeinsam drehbar sind und in einem zweiten Betriebszustand des Ventilsystems 2 mittels der Kopplungsvorrichtung 74 unabhängig voneinander drehbar sind. Siehe hierzu die Fig. 1 und 2a sowie die Fig. 3a bis 3h in einer Zusammenschau.

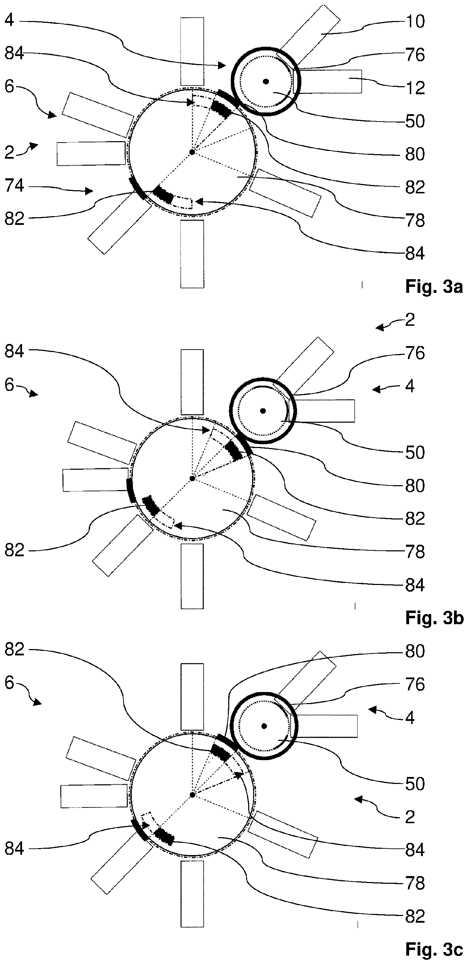

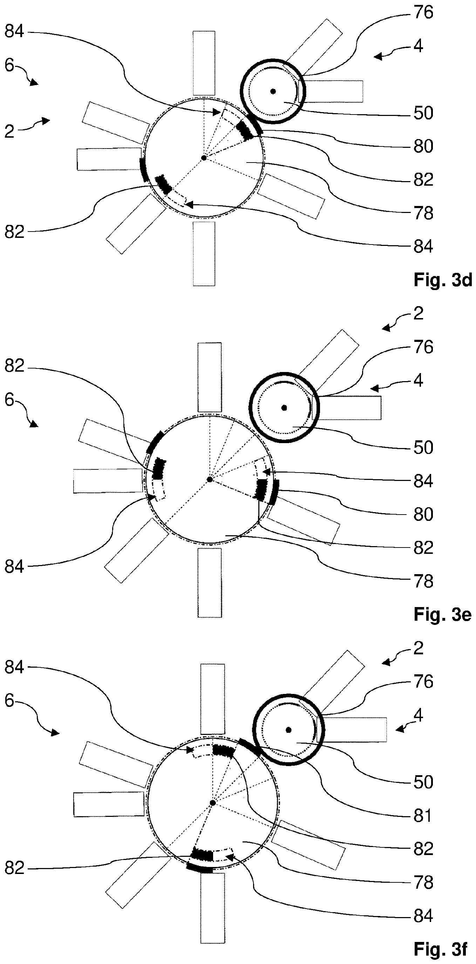

Die Kopplungsvorrichtung 74 weist hierfür ein an dem Ventilkörper 50 des ersten Ventils 4 ausgebildetes Zahnrad 76 und zwei an einem mit dem Ventilkörper 52 des zweiten Ventils 6 kraftübertragend verbundenen Übertragungsmittel 78 angeordnete kreisbogenförmig ausgebildete Zahnradsegmente 80, 81 auf. Das Übertragungsmittel 78 ist bei dem vorliegenden Ausführungsbeispiel als eine Scheibe ausgebildet. Zwecks Ausbildung einer Freilaufanordnung weist das als Scheibe ausgebildete Übertragungsmittel 78 zwei gegenüberliegend angeordnete Vorsprünge 82 auf, die jeweils in eine dazu korrespondierende kreisbogenförmige Nut 84 des Ventilkörpers 52 des zweiten Ventils 6 eingreifen. Die so beschriebene Freilaufanordnung der Kopplungsvorrichtung 74 ist dabei derart ausgebildet, dass der Ventilkörper 50 des ersten Ventils 4 in einem Freilaufzustand der Freilaufanordnung bei einer Drehung des Ventilkörpers 50 um die Drehachse 46 in einem betragsmäßig vorher festgelegten Drehwinkelbereich mit dem Ventilkörper 52 des zweiten Ventils 6 nicht drehmomentübertragend verbunden ist. Gleiches gilt für den Ventilkörper 52 des zweiten Ventils 6 der in dem Freilaufzustand der Freilaufanordnung bei einer Drehung des Ventilkörpers 52 um die Drehachse 48 in einem betragsmäßig vorher festgelegten Drehwinkelbereich mit dem Ventilkörper 50 des ersten Ventils 4 ebenfalls nicht drehmomentübertragend verbunden ist. Dies wird nachfolgend, insbesondere anhand der Fig. 3a bis 3h, näher ausgeführt.

Erfindungsgemäß weisen der Ventilkörper und das Gehäuse des ersten und/oder zweiten Ventils zueinander korrespondierende Rastmittel auf, wobei die Rastmittel derart ausgebildet sind, dass dieser Ventilkörper in dem Freilaufzustand der Freilaufanordnung mit diesem Gehäuse verrastet ist und in einem Kraftübertragungszustand der Freilaufanordnung, in dem mittels der Kopplungsvorrichtung ein Drehmoment zwischen den beiden Ventilkörpern übertragbar ist, die Verrastung der Rastmittel gelöst ist. Durch die vorgenannte Rastmittelanordnung ist sichergestellt, dass der in dem Freilaufzustand der Freilaufanordnung nicht angetriebene Ventilkörper nicht in ungewünschter Weise, beispielsweise aufgrund von Reibung oder dergleichen, mit dem in dem Freilaufzustand der Freilaufanordnung angetriebenen Ventilkörper des ersten Ventils mitdreht und in dem Kraftübertragungszustand der Freilaufanordnung in gewünschter Weise mit dem angetriebenen Ventilkörper mitdreht. Die erfindungsgemäße Rastmittelanordnung ist in den Fig. 1 bis 6f nicht dargestellt.

Im Nachfolgenden wird die Funktionsweise des erfindungsgemäßen Ventilsystems gemäß dem ersten Ausführungsbeispiel anhand der Fig. 1 bis 4 näher erläutert.

Das Übertragungsmittel 78 ist beispielsweise auf dem Fachmann bekannte Weise mittels eines nicht dargestellten und mittels einer ebenfalls nicht dargestellten Steuerung angesteuerten Stellmotors um die Drehachse 48 drehbar. Die Drehachsen 46, 48 verlaufen in der Fig. 2a senkrecht zu der Bildebene der Fig. 2a.

Zunächst befindet sich das Ventilsystem 2 in dem aus der Fig. 3a ersichtlichen Zustand. Wie daraus ersichtlich ist, ist die Gehäuseöffnung 10 mittels des Ventilkörpers 50 blockiert und die Gehäuseöffnung 12 mittels des Ventilkörpers 50 geöffnet, so dass gemäß der Fig. 3a die Gehäuseöffnung 12 mittels des ersten Ventils 4 und in Abhängigkeit der Drehlage des Ventilkörpers 52 des zweiten Ventils 6 um die Drehachse 48 strömungsleitend mit mindestens einer der übrigen Gehäuseöffnungen 14 bis 24 des Gehäuses 8 verbindbar ist. Das vorgenannte Öffnen oder Schließen der Gehäuseöffnungen 10, 12 mittels des Ventilkörpers 50 ist in den Fig. 3a bis 3h jeweils durch zwei durchgängige Kreisbögen auf einer punktierten Kreislinie symbolisiert.

Wird das Übertragungsmittel 78 in der Bildebene der Fig. 3a im Uhrzeigersinn nach rechts gedreht, so gelangt das Zahnrad 76 des Ventilkörpers 50 gemäß der Fig. 3a in Eingriff mit dem Zahnradsegment 80 des Übertragungsmittels 78, so dass der Ventilkörper 50 des ersten Ventils 4 im Gegenuhrzeigersinn um die Drehachse 46 gedreht wird. Aufgrund der Tatsache, dass die mit den Nuten 84 in Eingriff befindlichen Vorsprünge 82 an dem Übertragungsmittel 78 kraftübertragend anliegen, dreht das Übertragungsmittel 78 den Ventilkörper 52 des zweiten Ventils 6 mit, so dass das Ventilsystem 2 sich wie aus der Fig. 3b ersichtlich darstellt. Bei der vorgenannten Überführung des Ventilsystems 2 von dessen Zustand gemäß der Fig. 3a in dessen Zustand gemäß der Fig. 3b wird, wie aus den Fig. 3a und 3b ersichtlich ist, die Gehäuseöffnung 12 mittels des Ventilkörpers 50 des ersten Ventils 4 geschlossen und die Gehäuseöffnung 10 mittels des Ventilkörpers 50 des ersten Ventils 4 geöffnet. Das Ventilsystem 2 befindet sich somit bei dessen Überführung von dessen Zustand gemäß der Fig. 3a in dessen Zustand gemäß der Fig. 3b in einem ersten Betriebszustand des Ventilsystems 2, in dem der Ventilkörper 50 des ersten Ventils 4 mittels der Kopplungsvorrichtung 74 gemeinsam mit dem Ventilkörper 52 des zweiten Ventils 6 drehbar ist. Die Freilaufanordnung der Kopplungsvorrichtung 74 befindet sich somit in deren Kraftübertragungszustand.

Wird das Ventilsystem 2 von dem aus der Fig. 3b ersichtlichen Zustand in den aus der Fig. 3c ersichtlichen Zustand überführt, nämlich, in dem der Ventilkörper 50 mittel des Übertragungsmittels 78 im Uhrzeigersinn um die Drehachse 46 gedreht wird, wird die Gehäuseöffnung 12 mittels des Ventilkörpers 50 wieder geöffnet und die Gehäuseöffnung 10 mittels des Ventilkörpers 50 wieder geschlossen. Jedoch wird der Ventilkörper 52 des zweiten Ventils 6, anders als oben beschrieben, zunächst nicht mitgedreht. Dies deshalb, weil sich die oben erläuterte Freilaufanordnung der Kopplungsvorrichtung 74 in deren Freilaufzustand befindet, in dem die Vorsprünge 82 des als Scheibe ausgebildeten Übertragungsmittels 78 mit dem Ventilkörper 52 des zweiten Ventils 6 nicht kraftübertragend, nämlich drehmomentübertragend, zusammenwirken. Dieser Freilaufzustand der Freilaufanordnung der Kopplungsvorrichtung 74 dauert solange an, bis die Vorsprünge 82 an dem anderen Ende der Nut 84 angelangt sind, wie dies aus der Fig. 3c hervorgeht. Solange der erläuterte Freilaufzustand der Freilaufanordnung andauert ändert sich die Drehlage des Ventilkörpers 52 des zweiten Ventils 6 nicht. Entsprechend bleiben die gemäß der Fig. 3b mittels des Ventilkörpers 52 geöffneten oder geschlossenen Gehäuseöffnungen 14 bis 24 unverändert, zumindest, bis das Ventilsystem 2 den Zustand gemäß der Fig. 3c erreicht hat. Das Ventilsystem 2 befindet sich somit bei dessen Überführung von dessen Zustand gemäß der Fig. 3b in dessen Zustand gemäß der Fig. 3c in einem zweiten Betriebszustand des Ventilsystems 2, in dem der Ventilkörper 50 des ersten Ventils 4 mittels der Kopplungsvorrichtung 74 unabhängig von dem Ventilkörper 52 des zweiten Ventils 6 drehbar ist.

Wie aus einer Zusammenschau der Fig. 3c und der Fig. 3d ersichtlich ist, wird der Ventilkörper 50 lediglich soweit im Uhrzeigersinn und im Gegenuhrzeigersinn um die Drehachse 46 gedreht, dass die Freilaufanordnung in dem vorgenannten Freilaufzustand verbleibt, also einen vorher betragsmäßig festgelegten Drehwinkelbereich nicht überschreitet.

Wie ferner aus einer Zusammenschau der Fig. 3d bis 3f hervorgeht, ist der Ventilkörper 52 des zweiten Ventils 6 bei dem vorliegenden Ausführungsbeispiel mittels des Übertragungsmittels 78 auch unabhängig von dem Ventilkörper 50 des ersten Ventils 4 um die Drehachse 48 drehbar. In dem Fall gemäß der Fig. 3d bis 3f wird das Übertragungsmittel 78 und damit der Ventilkörper 52 des zweiten Ventils 6 im Uhrzeigersinn um die Drehachse 48 gedreht, bis dass das Zahnradsegment 81 des den Ventilkörper 52 drehenden Übertragungsmittels 78 in Eingriff mit dem Zahnrad 76 des Ventilkörpers 50 gelangt. Das Ventilsystem 2 befindet sich somit bei dessen Überführung von dessen Zustand gemäß der Fig. 3d in dessen Zustand gemäß der Fig. 3f in dem zweiten Betriebszustand des Ventilsystems 2, in dem der Ventilkörper 52 des zweiten Ventils 6 mittels der Kopplungsvorrichtung 74 unabhängig mit dem Ventilkörper 50 des ersten Ventils 4 drehbar ist.

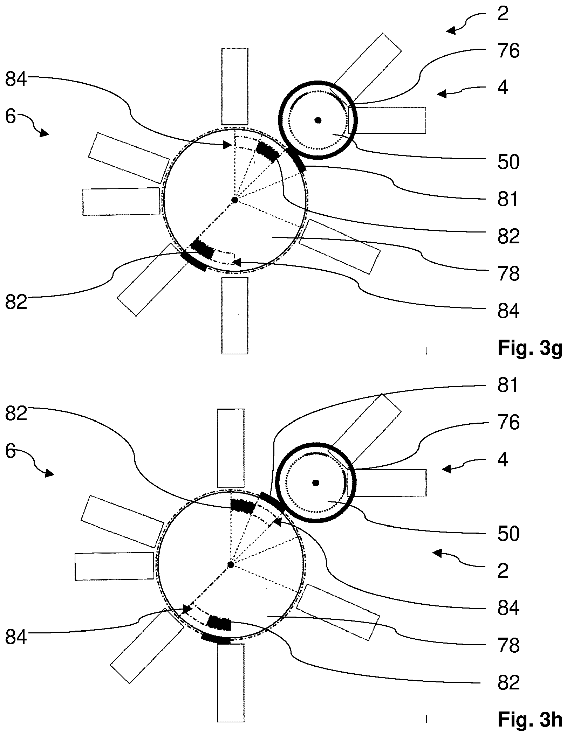

Bei einer weiteren Drehung des Ventilkörpers 52 des zweiten Ventils 6 im Uhrzeigersinn um die Drehachse 48 ergibt sich eine Kopplung oder Entkopplung analog zu der bereits oben anhand der Fig. 3a bis 3c erläuterten Kopplung oder Entkopplung der beiden Ventilkörper 50, 52 der beiden Ventile 4, 6. Entsprechend kann bezüglich der Fig. 3g und 3h auf die obigen Ausführungen verwiesen werden.

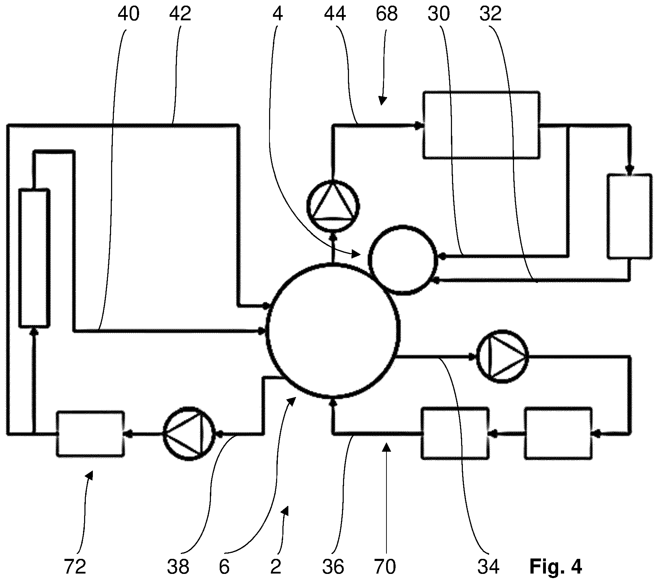

Eine beispielhafte verfahrenstechnische Einbindung des Ventilsystems 2 ergibt sich aus der Fig. 4. Beispielsweise findet das Ventilsystem 2 Anwendung in der Ansteuerung von komplexen Fluidsystemen mit Fluidkreisläufen bei Fahrzeugen, wie die Fluidkreisläufe 68, 70, 72 des Ausführungsbeispiels. Auch neuere Kraftfahrzeugkonzepte für Landfahrzeuge, wie beispielsweise Hybrid- oder Elektroautos, verfügen über derart komplexe Fluidsysteme mit Fluidkreisläufen. Bei den Fluidkreisläufen, wie den Fluidkreisläufen 68, 70, 72, kann es sich zum Beispiel um Kühlkreisläufe und/oder Heizkreisläufe handeln, wobei derselbe Fluidkreislauf gleichzeitig als Kühlkreislauf und als Heizkreislauf ausgebildet sein kann. Je nach Betriebsmodus kann es erforderlich sein, Fluidkreisläufe eines derartigen Fluidsystems zu schließen oder zu öffnen, miteinander zu verbinden oder voneinander zu trennen. Hierbei ist das erfindungsgemäße Ventilsystem gemäß dem vorliegenden Ausführungsbeispiel vorteilhaft einsetzbar.

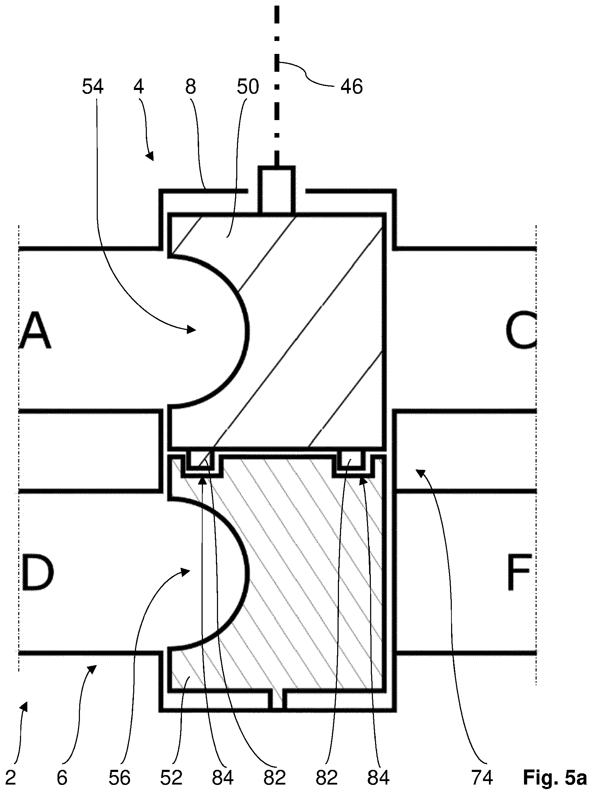

In den Fig. 5a bis 6f ist ein zweites Ausführungsbeispiel des erfindungsgemäßen Ventilsystems ebenfalls rein exemplarisch und nicht beschränkend dargestellt. Gleich oder gleichwirkende Bauteile sind mit den gleichen Bezugszeichen wie bei dem ersten Ausführungsbeispiel bezeichnet. Ferner wird das zweite Ausführungsbeispiel lediglich im Umfang der Unterschiede zu dem ersten Ausführungsbeispiel erläutert. Ansonsten wird auf das erste Ausführungsbeispiel verwiesen. Auch ist es möglich, zwecks Ausbildung weiterer Varianten und Ausführungsformen des erfindungsgemäßen Ventilsystems, einzelne Aspekte aus den beiden erläuterten Ausführungsbeispielen miteinander zu kombinieren.

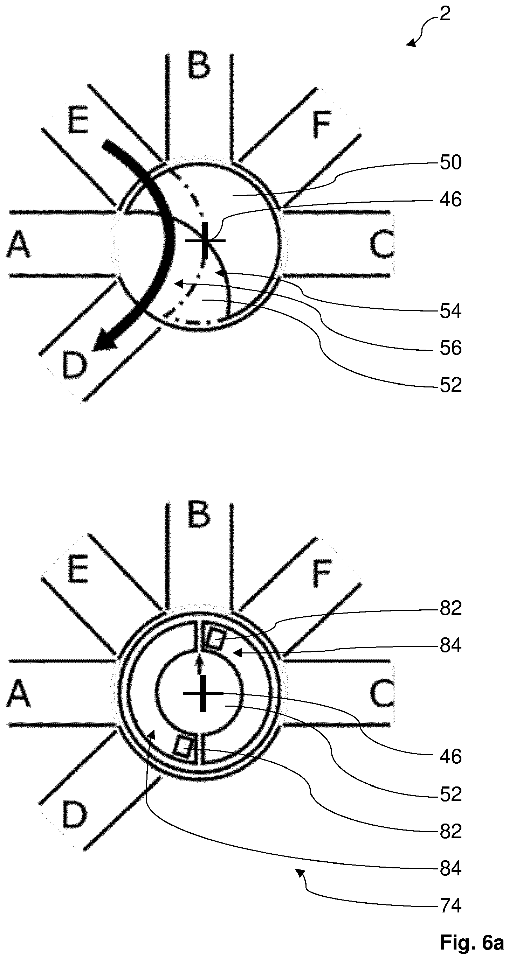

Im Unterschied zu dem ersten Ausführungsbeispiel sind das erste Ventil 4 und das zweite Ventil 6 des zweiten Ausführungsbeispiels entlang einer gemeinsamen Drehachse 46 der Ventilkörper 50, 52 übereinander angeordnet. Siehe hierzu die Fig. 5a. Anders als bei dem ersten Ausführungsbeispiel weist jeder der beiden Ventilkörper 50, 52 lediglich einen einzigen Verbindungskanal 54, 56 zur Verbindung von mindestens zwei der Gehäuseöffnungen A bis F auf. Die Gehäuseöffnungen A bis F des zweiten Ausführungsbeispiels sind in den Fig. 5a bis 6f zwecks einer leichteren Unterscheidbarkeit der beiden Ausführungsbeispiele von den Gehäuseöffnungen 10 bis 24 des ersten Ausführungsbeispiels verschieden bezeichnet, wobei die Gehäuseöffnungen A, B, C dem ersten Ventil 4 und die Gehäuseöffnungen D, E, F dem zweiten Ventil 6 zugeordnet sind. Der Ventilkörper 50 mit dem Verbindungskanal 54 ist in den Fig. 6a bis 6f jeweils mit durchgezogenen Linien dargestellt, während der Ventilkörper 52 mit dem Verbindungskanal 56 in den Fig. 6a bis 6f jeweils mit strichpunktierten Linien dargestellt ist.

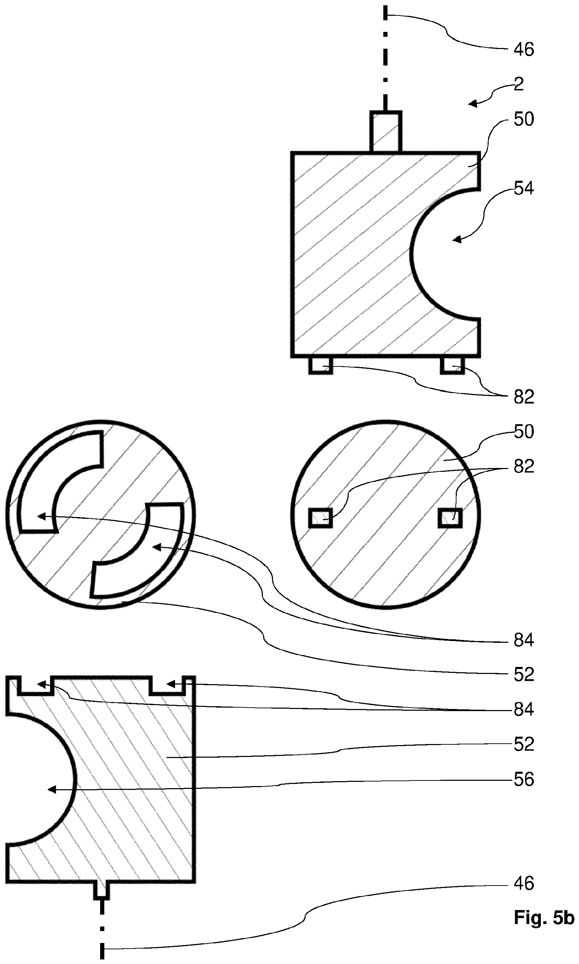

Aus den Fig. 5a und 5b ist der konstruktive Aufbau des Ventilsystems 2 gemäß dem zweiten Ausführungsbeispiel, insbesondere die Ausbildung der Kopplungsvorrichtung 74, näher ersichtlich, wobei die Kopplungsvorrichtung 74 des zweiten Ausführungsbeispiels analog zu der Kopplungsvorrichtung 74 des ersten Ausführungsbeispiels ausgebildet ist. Im Unterschied zu dem ersten Ausführungsbeispiel sind die in die Nuten 84 eingreifenden Vorsprünge 82 direkt an dem Ventilkörper 50 des ersten Ventils 4 ausgebildet. Entsprechend entfällt hier die Notwendigkeit eines Übertragungsmittels und einer drehmomentübertragenden Kopplung und Entkopplung des Übertragungsmittels einerseits an dem Ventilkörper 50 des ersten Ventils 4 und andererseits an dem Ventilkörper 52 des zweiten Ventils 6. Die beiden Ventilkörper 50, 52 sind bei dem zweiten Ausführungsbeispiel, nämlich mittels der Vorsprünge 82 und der Nuten 84, miteinander direkt gekoppelt.

Im Nachfolgenden wird die Funktionsweise des erfindungsgemäßen Ventilsystems gemäß dem zweiten Ausführungsbeispiel anhand der Fig. 5a bis 6f, im Umfang der Unterschiede zu dem ersten Ausführungsbeispiel, näher erläutert.

Zunächst befindet sich das Verteilsystem 2 gemäß dem zweiten Ausführungsbeispiel in dem Zustand gemäß der Fig. 6a. Wie daraus ersichtlich ist, sind in diesem Zustand des Ventilsystems 2 die Gehäuseöffnungen E und D miteinander strömungsleitend, also kühlmittelleitend, verbunden. Alle übrigen Gehäuseöffnungen A bis C und F sind mit keiner weiteren Gehäuseöffnung der Gehäuseöffnungen A bis F strömungsleitend verbunden. Wie aus der in der Bildebene der Fig. 6a unten gezeigten Schnittdarstellung hervorgeht, liegen die beiden Vorsprünge 82 des Ventilkörpers 50 des ersten Ventils 4 jeweils an einem Ende der korrespondierenden Nut 84 des Ventilkörpers 52 des zweiten Ventils 6 kraftübertragend an. Würde der Ventilkörper 50 des ersten Ventils 4 nun im Gegenuhrzeigersinn um die Drehachse 46 gedreht, so würde der Ventilkörper 52 des zweiten Ventils 6 mittels der Kopplungsvorrichtung 74 mitgedreht werden.

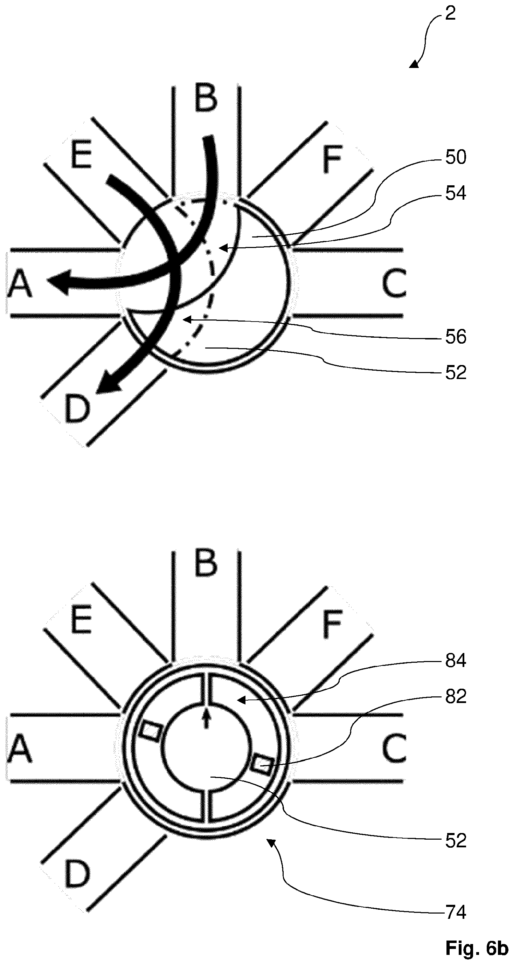

Dies ist jedoch nicht der Fall. Stattdessen wird der Ventilkörper 50 des ersten Ventils 4 im Uhrzeigersinn um die Drehachse 46 gedreht. Siehe hierzu die Fig. 6b. Wie aus einem Vergleich der in der jeweiligen Bildebene der Fig. 6a und 6b oben angeordneten Darstellungen deutlich hervorgeht, wird dabei lediglich der Ventilkörper 50 des ersten Ventils 4 um die Drehachse 46 gedreht, nicht aber der Ventilkörper 52 des zweiten Ventils 6. Dies deshalb, weil sich die mittels der zueinander korrespondierenden Vorsprünge 82 und Nuten 84 gebildete Freilaufanordnung der Kopplungsvorrichtung 74 in deren Freilaufzustand befindet, in dem zwischen dem Ventilkörper 50 und dem Ventilkörper 52 keine Kraftübertragung, nämlich keine Drehmomentübertragung, erfolgt. Bei der vorgenannten Drehung des Ventilkörpers 50 werden nun zusätzlich zu den Gehäuseöffnungen E und D auch die Gehäuseöffnungen B und A miteinander strömungsleitend verbunden.

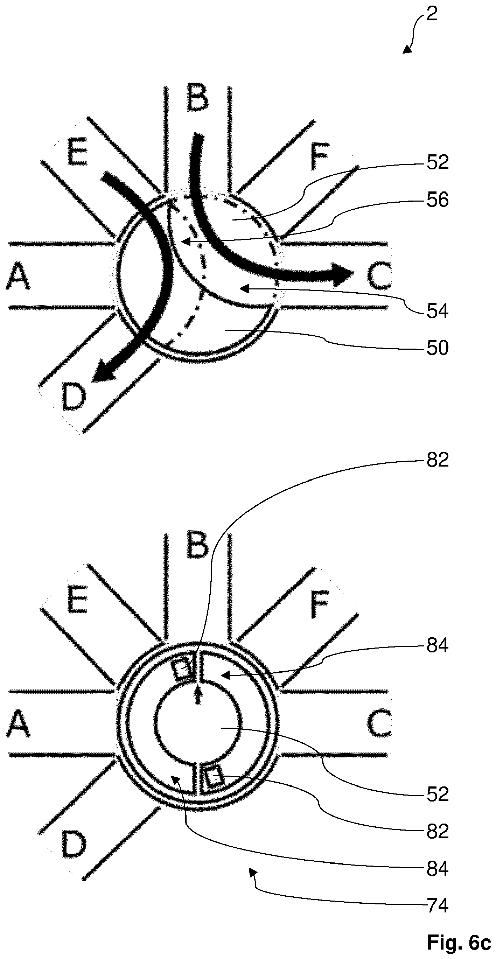

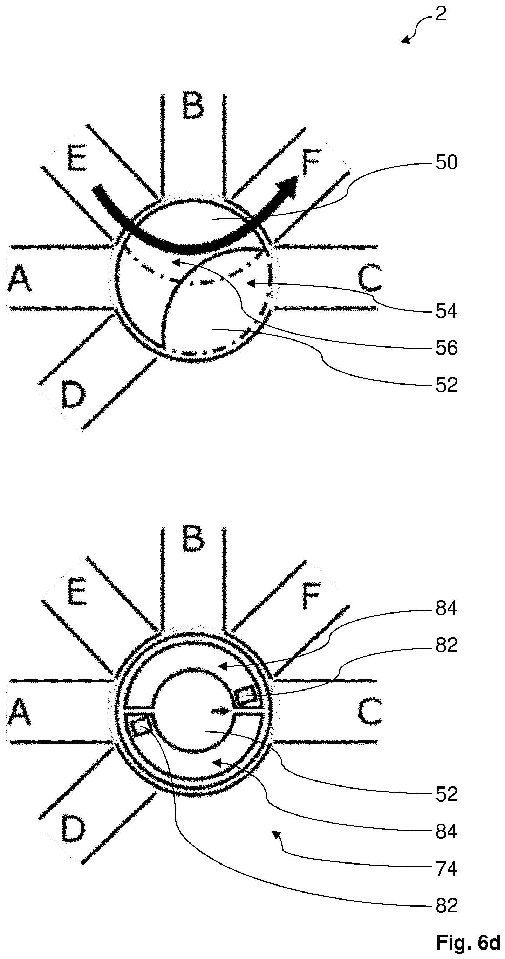

Dieser Freilaufzustand dauert solange an, bis der Ventilkörper 50 des ersten Ventils 4 die aus der Fig. 6c ersichtliche Drehlage erreicht hat. Bei der weiteren Drehung des Ventilkörpers 50, also bei der Überführung des Ventilsystems 2 von dessen Zustand gemäß der Fig. 6b in dessen Zustand gemäß der Fig. 6c bleibt die strömungsleitende Verbindung der Gehäuseöffnungen E und D somit nach wie vor unverändert bestehen, wohingegen die strömungsleitende Verbindung zwischen den Gehäuseöffnungen B und A wieder getrennt wird und stattdessen die Gehäuseöffnungen B und C miteinander strömungsleitend verbunden werden. Die beiden Vorsprünge 82 liegen nun an den beiden anderen Enden der jeweiligen Nut 84 kraftübertragend an. Wird der Ventilkörper 50 des ersten Ventils 4 nun weiter im Uhrzeigersinn um die Drehachse 46 gedreht, so wird der Ventilkörper 52 des zweiten Ventils 6 im Uhrzeigersinn mitgedreht. Siehe die Zusammenschau aus den Fig. 6c und 6d. Die Freilaufanordnung der Kraftübertragungsvorrichtung 74 befindet sich somit in deren Kraftübertragungszustand. Aufgrund dieser Mitdrehung des Ventilkörpers 52 mit dem Ventilkörper 50 wird nun die strömungsleitende Verbindung zwischen den Gehäuseöffnungen E und D getrennt und stattdessen werden die Gehäuseöffnungen E und F miteinander strömungsleitend verbunden.

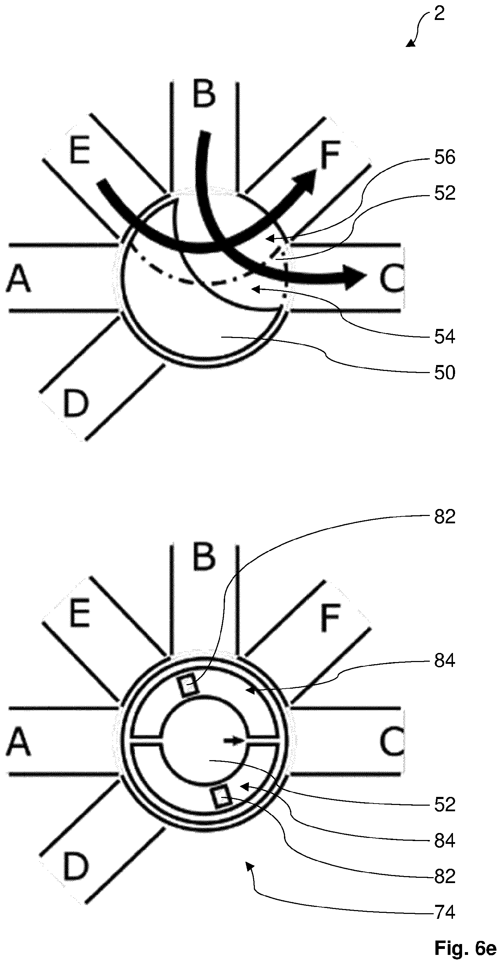

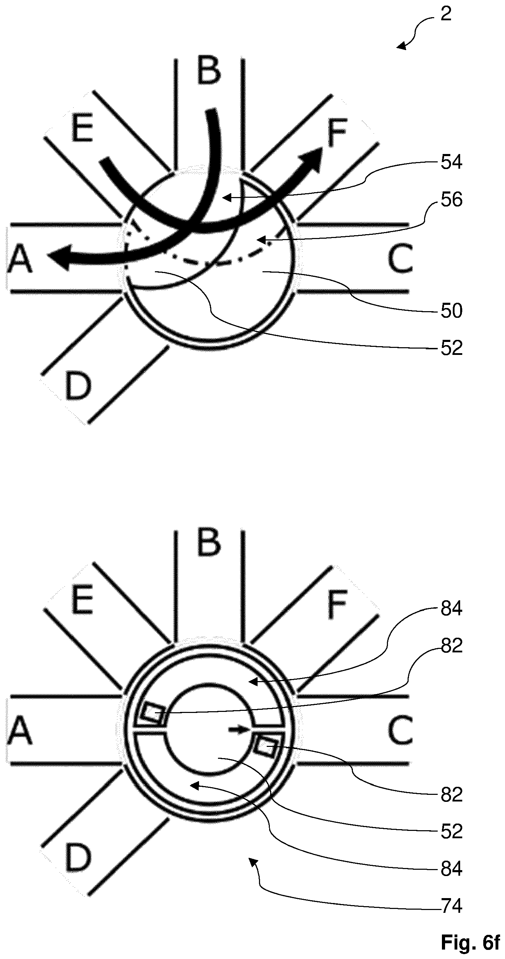

Mittels einer Drehrichtungsumkehr, nämlich einer Drehung des Ventilkörpers 50 des ersten Ventils 4 im Gegenuhrzeigersinn um die Drehachse 46, befindet sich die Freilaufanordnung der Kopplungsvorrichtung 74 wieder in deren bereits erläuterten Freilaufzustand. Siehe hierzu die Fig. 6d bis 6f in einer Zusammenschau. In diesem Freilaufzustand ist es nun auf die bereits erläuterte Weise möglich, zusätzlich zu den Gehäuseöffnungen E und F auch die Gehäuseöffnungen B und C miteinander strömungsleitend zu verbinden. Siehe die Fig. 6e. Bei der weiteren Drehung des Ventilkörpers 50 im Gegenuhrzeigersinn lässt sich die strömungsleitende Verbindung der Gehäuseöffnungen B und C wieder trennen und stattdessen werden die Gehäuseöffnungen B und A miteinander verbunden. Siehe die Fig. 6f. Da sich die Freilaufanordnung der Kopplungsvorrichtung 74 bei der Überführung des Ventilsystems 2 von dessen Zustand gemäß der Fig. 6d bis in dessen Zustand gemäß der Fig. 6f ständig im Freilaufzustand befindet, ändert sich die Drehlage des Ventilkörpers 52 des zweiten Ventils 6 nicht, so dass es unverändert bei der strömungsleitenden Verbindung zwischen den Gehäuseöffnungen E und F bleibt. Siehe die Fig. 6d bis 6f in einer Zusammenschau.

Aufgrund der erfindungsgemäßen Ausbildung des Ventilsystems gemäß der beiden Ausführungsbeispiele ist es somit möglich, eine Mehrzahl von externen Strömungskanälen eines Fluidsystems mit beispielsweise einer Mehrzahl von externen Fluidkreisläufen auf konstruktiv und schaltungstechnisch einfache Art und Weise anzusteuern. Das Ventilsystem 2 gemäß der vorliegenden Ausführungsbeispiele ist für eine Vielzahl von Kombinationen zwischen miteinander strömungsleitend verbindbaren und trennbaren externen Strömungskanälen für eine Vielzahl von Fluidsystemen geeignet ausgebildet, wobei der konstruktive, fertigungstechnische und schaltungstechnische Aufwand reduziert ist. Entsprechend sind der Montageaufwand und die Kosten sowie der dafür erforderliche Bauraum wesentlich verringert.

Die Erfindung ist nicht auf die vorliegenden Ausführungsbeispiele begrenzt. Beispielsweise ist das erfindungsgemäße Ventilsystem für eine Vielzahl von Anwendungen auf dem Gebiet der Kraftfahrzeugtechnik und außerhalb der Kraftfahrzeugtechnik vorteilhaft einsetzbar.

Insbesondere ist die Erfindung nicht auf die konstruktiven und schaltungstechnischen Details der vorliegenden Ausführungsbeispiele beschränkt.

### Bezugszeichenliste

- 2: Ventilsystem
- 4: Erstes Ventil
- 6: Zweites Ventil
- 8: Gehäuse
- 10: Gehäuseöffnung erstes Ausführungsbeispiel
- 12: Gehäuseöffnung erstes Ausführungsbeispiel
- 14: Gehäuseöffnung erstes Ausführungsbeispiel
- 16: Gehäuseöffnung erstes Ausführungsbeispiel
- 18: Gehäuseöffnung erstes Ausführungsbeispiel
- 20: Gehäuseöffnung erstes Ausführungsbeispiel
- 22: Gehäuseöffnung erstes Ausführungsbeispiel
- 24: Gehäuseöffnung erstes Ausführungsbeispiel
- 30: Externer Strömungskanal
- 32: Externer Strömungskanal
- 34: Externer Strömungskanal
- 36: Externer Strömungskanal
- 38: Externer Strömungskanal
- 40: Externer Strömungskanal
- 42: Externer Strömungskanal
- 44: Externer Strömungskanal
- 46: Drehachse
- 48: Drehachse
- 50: Ventilkörper erstes Ventil 4
- 52: Ventilkörper zweites Ventil 6
- 54: Verbindungskanal Ventilkörper 50
- 56: Verbindungskanal Ventilkörper 52
- 58: Verbindungskanal Ventilkörper 52
- 60: Verbindungskanal Ventilkörper 52
- 62: Verbindungskanal Ventilkörper 52
- 64: Verbindungskanal Ventilkörper 52
- 66: Verbindungskanal Ventilkörper 52
- 68: Fluidkreislauf
- 70: Fluidkreislauf
- 72: Fluidkreislauf
- 74: Kopplungsvorrichtung
- 76: Zahnrad Ventilkörper 50
- 78: Übertragungsmittel
- 80: Zahnradsegment
- 81: Zahnradsegment
- 82: Vorsprung Kopplungsvorrichtung 74
- 84: Nut Kopplungsvorrichtung 74
- A: Gehäuseöffnung zweites Ausführungsbeispiel
- B: Gehäuseöffnung zweites Ausführungsbeispiel
- C: Gehäuseöffnung zweites Ausführungsbeispiel
- D: Gehäuseöffnung zweites Ausführungsbeispiel
- E: Gehäuseöffnung zweites Ausführungsbeispiel
- F: Gehäuseöffnung zweites Ausführungsbeispiel

## Patentansprüche

1. Ventilsystem (2), umfassend ein erstes Ventil (4) und ein zweites Ventil (6), wobei beide Ventile (4, 6) jeweils ein Gehäuse (8) mit einer Mehrzahl von Gehäuseöffnungen (10 bis 24; A bis F), jeweils zur strömungsleitenden Verbindung mit einem externen Strömungskanal (30 bis 44) für ein Fluid, und einen in dem Gehäuse (8) um eine Drehachse (46, 48) drehbar angeordneten Ventilkörper (50, 52) mit mindestens einem Verbindungskanal (54 bis 66; 54, 56) zur strömungsleitenden Verbindung von mindestens zwei der Gehäuseöffnungen (10 bis 24; A bis F) des Gehäuses (8) aufweisen, und wobei zwischen dem Gehäuse (8) und dem Ventilkörper (50, 52) eine Dichtung mit zu den Gehäuseöffnungen (10 bis 24; A bis F) in dem Gehäuse (8) korrespondierenden Dichtungsöffnungen zur Abdichtung der strömungsleitenden Verbindungen gegenüber einer freien Umgebung angeordnet ist, und wobei der Ventilkörper (50) des ersten Ventils (4) und der Ventilkörper (52) des zweiten Ventils (6) mittels einer Kopplungsvorrichtung (74) des Ventilsystems (2) miteinander mechanisch koppelbar sind, wobei die Kopplungsvorrichtung (74) derart ausgebildet ist, dass die Ventilkörper (50, 52) in einem ersten Betriebszustand des Ventilsystems (2) mittels der Kopplungsvorrichtung (74) gemeinsam drehbar sind und in einem zweiten Betriebszustand des Ventilsystems (2) mittels der Kopplungsvorrichtung (74) unabhängig voneinander drehbar sind, und wobei die Kopplungsvorrichtung (74) eine Freilaufanordnung aufweist, die derart ausgebildet ist, dass die Ventilkörper (50, 52) in einem Freilaufzustand der Freilaufanordnung bei einer Drehung des Ventilkörpers (50, 52) um die jeweilige Drehachse (46, 48) in einem betragsmäßig vorher festgelegten Drehwinkelbereich nicht drehmomentübertragend verbunden sind,
**dadurch gekennzeichnet,**
**dass** der Ventilkörper und das Gehäuse des ersten und/oder zweiten Ventils zueinander korrespondierende Rastmittel aufweisen, wobei die Rastmittel derart ausgebildet sind, dass dieser Ventilkörper in dem Freilaufzustand der Freilaufanordnung mit diesem Gehäuse verrastet ist und in einem Kraftübertragungszustand der Freilaufanordnung, in dem mittels der Kopplungsvorrichtung ein Drehmoment zwischen den beiden Ventilkörpern übertragbar ist, die Verrastung der Rastmittel gelöst ist.

2. Ventilsystem (2) nach Anspruch 1,
**dadurch gekennzeichnet,**
**dass** die Freilaufanordnung mindestens eine Nut (84) und mindestens einen zu der Nut (84) korrespondierend ausgebildeten und in die Nut (84) eingreifenden Vorsprung (82) aufweist, wobei die Nut (84) und der Vorsprung (82) jeweils an einem der beiden Ventilkörper (6; 4, 6) und/oder an mindestens einem mit mindestens einem der beiden Ventilkörper (4) kraftübertragend verbundenen Übertragungsmittel (78) angeordnet sind.

3. Ventilsystem (2) nach einem der Ansprüche 1 oder 2,
**dadurch gekennzeichnet,**
**dass** die Kopplungsvorrichtung (74) mindestens eine Zahnradpaarung mit einem ersten Zahnrad (76) und einem zweiten Zahnrad (80, 81) aufweist, wobei die beiden Zahnräder (76, 80, 81) jeweils an einem der beiden Ventilkörper (50) und/oder an mindestens einem mit mindestens einem der beiden Ventilkörper (52) kraftübertragend verbundenen Übertragungsmittel (78) angeordnet sind.

4. Ventilsystem (2) nach einem der Ansprüche 1 bis 3,
**dadurch gekennzeichnet,**
**dass** das erste Ventil und/oder das zweite Ventil (6) als ein Mehrwegeventil ausgebildet ist, bevorzugt, dass mindestens einer des mindestens einen Verbindungskanals (56 bis 66) des Mehrwegeventils als eine bogenförmige, bevorzugt als eine kreisbogenförmige, Ausnehmung des Ventilkörpers (52) ausgebildet ist.

5. Ventilsystem (2) nach Anspruch 4,
**dadurch gekennzeichnet,**
**dass** das Mehrwegeventil mindestens eine Ebene mit einer Mehrzahl von Verbindungskanälen (56 bis 60 und 62 bis 66) aufweist, bevorzugt, dass einer der Verbindungskanäle dieser Ebene (56 bis 60) als ein zentraler Kanal (56) ausgebildet ist, wobei die übrigen Verbindungskanäle (58, 60) dieser Ebene jeweils zu beiden Seiten des zentralen Kanals (56) angeordnet sind.

6. Ventilsystem (2) nach Anspruch 5,
**dadurch gekennzeichnet,**
**dass** das Mehrwegeventil eine Mehrzahl von Ebenen aufweist, wobei die einzelnen Ebenen parallel zueinander angeordnet sind, bevorzugt, dass sich mindestens einer des mindestens einen Verbindungskanals über mindestens zwei Ebenen erstreckt, besonders bevorzugt, dass dieser Verbindungskanal als ein zentraler Kanal ausgebildet ist.

7. Ventilsystem (2) nach einem der Ansprüche 1 bis 6,
**dadurch gekennzeichnet,**
**dass** das Ventilsystem (2) derart ausgebildet ist, dass mittels des Ventilsystems (2) gleichzeitig drei externe Fluidkreisläufe (68, 70, 72) ansteuerbar sind, wobei jeder der drei externen Fluidkreisläufe (68, 70, 72) mittels der externen Strömungskanäle (30 bis 44) mit mindestens zwei voneinander verschiedenen Gehäuseöffnungen (10 bis 24) strömungsleitend verbunden ist, bevorzugt, dass mindestens einer der drei externen Fluidkreisläufe (68, 72) einen als Bypasskanal ausgebildeten externen Strömungskanal (30, 42) für mindestens eine Komponente dieses externen Fluidkreislaufs (68, 72) aufweist, wobei der Bypasskanal separat an einer der Gehäuseöffnungen (10, 22) des Ventilsystems (2) strömungsleitend angeschlossen ist.

8. Ventilsystem (2) nach einem der Ansprüche 1 bis 7,
**dadurch gekennzeichnet,**
**dass** das Gehäuse des ersten Ventils (4) und das Gehäuse des zweiten Ventils (6) zumindest teilweise, bevorzugt vollständig, als ein gemeinsames Gehäuse (8) ausgebildet sind.

## Claims

1. Valve system (2) comprising a first valve (4) and a second valve (6), wherein the two valves (4, 6) each have a housing (8) with a plurality of housing apertures (10 through 24; A to F), each for flow-conducting connection with an external flow channel (30 through 44) for a fluid and a valve body (50, 52) arranged in the housing (8) to be rotatable around a rotation axis (46, 48) with at least one connecting channel (54 through 66; 54, 56) for flow-conducting connection of at least two of the housing apertures (10 through 24; A through F) of the housing (8), and wherein a seal is arranged between the housing (8) and the valve body (50, 52) with seal apertures corresponding to the housing apertures (10 through 24; A through F) in the housing (8) for sealing the flow-conducting connections towards a free environment, and wherein the valve body (50) of the first valve (4) and the valve body (52) of the second valve (6) can be coupled mechanically to each other by means of a coupling device (74) of the valve system (2), wherein the coupling device (74) is formed in such a way that the valve bodies (50, 52) in a first operating state of the valve system (2) are rotatable together by means of the coupling device (74) and in a second operating state of the valve system (2) are rotatable independently of each other by means of the coupling device (74), and wherein the coupling device (74) features a free-running arrangement which is designed such that the valve bodies (50, 52) are not connected in a torque-transmitting manner in a free-running state of the free-running arrangement when the valve body (50 52) is rotated about the respective rotation axis (46, 48) in a rotation angle range previously specified in terms of amount,
**characterized in that**
the valve body and the housing of the first and/or second valve feature latching means corresponding to each other, the latching means being formed in such a way that this valve body is latched to this housing in the free-running state of the free-running arrangement and in a force-transmitting state of the free-running arrangement in which a torque can be transmitted between the two valve bodies by means of the coupling device the latching of the latching means is disengaged.

2. Valve system (2) in accordance with claim 1,
**characterized in that**
the free-running arrangement features at least one groove (84) and at least one protrusion (82) formed to correspond to the groove (84) and engaging in the groove (84), wherein the groove (84) and the protrusion (82) each are arranged on one of the two valve bodies (6; 4, 6) and/or on at least one of the means of transmission (78) connected in a force-transmitting manner with at least one of the two valve bodies (4).

3. Valve system (2) in accordance with one of claims 1 or 2,
**characterized in that**
the coupling device (74) features at least one gear wheel pair with a first gear wheel (76) and a second gear wheel (80, 81), wherein the two gear wheels (76, 80, 81) each being arranged on one of the two valve bodies (50) and/or on at least one means of transmission (78) connected in a force-transmitting manner with at least one of the two valve bodies (52).

4. Valve system (2) in accordance with one of claims 1 through 3,
**characterized in that**
the first valve and/or the second valve (6) is formed as a multi-port valve, preferentially **in that** at least one of the at least one connecting channels (56 through 66) of the multi-port valve is formed as an arched, preferentially as a circular arc-shaped, recess in the valve body (52).

5. Valve system (2) in accordance with claim 4,
**characterized in that**
the multi-port valve features at least one level with a plurality of connecting channels (56 through 60 and 62 through 66), preferentially **in that** one of the connecting channels of this level (56 through 60) is formed as a central channel (56), wherein the other connecting channels (58, 60) of this level are each arranged on both sides of the central channel (56).

6. Valve system (2) in accordance with claim 5,
**characterized in that**
the multi-port valve features a plurality of levels, wherein the individual levels are arranged in parallel to each other, preferentially **in that** at least one of the at least one connecting channels extends across at least two levels, especially preferentially **in that** such connecting channel is formed as a central channel.

7. Valve system (2) in accordance with one of claims 1 through 6,
**characterized in that**
the valve system (2) is formed in such a way that three external fluid circuits (68, 70, 72) can be actuated simultaneously by means of the valve system (2), wherein each of the three external fluid circuits (68, 70, 72) are connected in a flow-conducting manner by means of the external flow channels (30 through 44) with at least two housing apertures (10 through 24) differing from each other, preferentially **in that** at least one of the three external fluid circuits (68, 72) features an external flow channel (30, 42) formed as a bypass channel for at least one component of this external fluid circuit (68, 72), wherein the bypass channel is connected separately to one of the housing apertures (10, 22) of the valve system (2) in a flow-conducting manner.

8. Valve system (2) in accordance with one of claims 1 through 7,
**characterized in that**
the housing of the first valve (4) and the housing of the second valve (6) are at least partially, preferentially completely, formed as a shared housing (8).

## Revendications

1. Système de soupape (2), comprenant une première soupape (4) et une deuxième soupape (6), les deux soupapes (4, 6) comportant chacune un boîtier (8) avec plusieurs ouvertures (10 à 24 ; A à F), pour la liaison conductrice de l'écoulement avec un canal d'écoulement externe (30 à 44) pour un fluide, et un corps de soupape (50, 52) disposé dans le boîtier (8) de manière à pouvoir tourner autour d'un axe de rotation (46, 48) avec au moins un canal de liaison (54 à 66 ; 54, 56) pour la liaison conductrice de l'écoulement d'au moins deux des ouvertures du boîtier (10 à 24 ; A à F) du boîtier (8), et dans lequel, entre le boîtier (8) et le corps de soupape (50, 52), un joint d'étanchéité avec des ouvertures correspondantes aux ouvertures du boîtier (10 à 24 ; A à F) dans le boîtier (8) pour assurer l'étanchéité des liaisons conductrices de l'écoulement par rapport à un environnement libre, et dans lequel le corps de soupape (50) de la première soupape (4) et le corps de soupape (52) de la deuxième soupape (6) peuvent être couplés mécaniquement l'un à l'autre au moyen d'un dispositif de couplage (74) du système de soupape (2), le dispositif de couplage (74) étant conçu de telle sorte que les corps de soupape (50, 52) peuvent être tournés ensemble au moyen du dispositif de couplage (74) dans un premier état de fonctionnement du système de soupape (2) et peuvent être tournés indépendamment l'un de l'autre au moyen du dispositif de couplage (74) dans un deuxième état de fonctionnement du système de soupape (2), et le dispositif de couplage (74) présentant un agencement de roue libre conçu de telle sorte que, dans un état de roue libre du dispositif de roue libre, les corps de soupape (50, 52) ne sont pas reliés de manière à transmettre un couple lors d'une rotation du corps de soupape (50, 52) autour de l'axe de rotation respectif (46, 48) dans une plage d'angles de rotation dont les valeurs sont prédéfinies,
**caractérisé en ce que**
le corps de soupape et le boîtier de la première et/ou de la deuxième soupape présentent des moyens d'encliquetage correspondant l'un à l'autre, les moyens d'encliquetage étant conçus de telle sorte que ce corps de soupape est encliqueté avec ce boîtier dans l'état de roue libre du dispositif de roue libre et que cet encliquetage est libéré dans un état de transmission de force du dispositif de roue libre dans lequel un couple peut être transmis entre les deux corps de soupape au moyen du dispositif de couplage.

2. Système de soupape (2) selon la revendication 1,
**caractérisé en ce que**
le dispositif de roue libre présente au moins une rainure (84) et au moins une saillie (82) réalisée de manière correspondante à la rainure (84) et s'engageant dans la rainure (84), la rainure (84) et la saillie (82) étant disposées respectivement sur l'un des deux corps de soupape (6 ; 4, 6) et/ou sur au moins un moyen de transmission (78) relié de manière à transmettre les forces à au moins l'un des deux corps de soupape (4).

3. Système de soupape (2) selon la revendication 1 ou 2,
**caractérisé en ce que**
le dispositif de couplage (74) présente au moins une paire de roues dentées avec une première roue dentée (76) et une deuxième roue dentée (80, 81), les deux roues dentées (76, 80, 81) étant disposées respectivement sur l'un des deux corps de soupape (50) et/ou sur au moins un moyen de transmission (78) relié par transmission de force à au moins l'un des deux corps de soupape (52).

4. Système de soupape (2) selon l'une des revendications 1 à 3,
**caractérisé en ce que**
la première soupape et/ou la deuxième soupape (6) est conçue comme une soupape à voies multiples et **en ce que**, de préférence, au moins l'un des canaux de liaison (56 à 66) de la soupape à voies multiples est conçu comme un évidement du corps de soupape (52) en forme d'arc, de préférence en forme d'arc de cercle.

5. Système de soupape (2) selon la revendication 4,
**caractérisé en ce que**
la soupape à voies multiples présente au moins un plan avec plusieurs canaux de liaison (56 à 60 et 62 à 66) et **en ce que**, de préférence, l'un des canaux de liaison de ce plan (56 à 60) est conçu comme un canal central (56), les autres canaux de liaison (58, 60) de ce plan étant disposés respectivement des deux côtés du canal central (56).

6. Système de soupape (2) selon la revendication 5,
**caractérisé en ce que**
la soupape à voies multiples présente plusieurs niveaux, les différents niveaux étant disposés parallèlement les uns aux autres, et **en ce que**, de préférence, au moins un canal de liaison s'étend sur au moins deux niveaux, et, de manière privilégiée, **en ce que** ce canal de liaison est conçu comme un canal central.

7. Système de soupape (2) selon l'une des revendications 1 à 6,
**caractérisé en ce que**
le système de soupape (2) est conçu de telle sorte que trois circuits de fluide externes (68, 70, 72) peuvent être commandés simultanément au moyen du système de soupape (2), chacun des trois circuits de fluide externes (68, 70, 72) étant relié de manière à conduire l'écoulement au moyen des canaux d'écoulement externes (30 à 44) à au moins deux ouvertures de boîtier (10 à 24) différentes les unes des autres, et **en ce que**, de préférence, au moins l'un des trois circuits de fluide externes (68, 72) présente un canal d'écoulement externe (30, 42) conçu comme un canal de dérivation pour au moins un composant de ce circuit de fluide externe (68, 72), le canal de dérivation étant raccordé séparément à l'une des ouvertures de boîtier (10, 22) du système de soupape (2) conduisant l'écoulement.

8. Système de soupape (2) selon l'une des revendications 1 à 7,
**caractérisé en ce que**
le boîtier de la première soupape (4) et le boîtier de la deuxième soupape (6) sont réalisés au moins partiellement, de préférence entièrement, sous la forme d'un boîtier commun (8).
